# EUROPEAN PATENT APPLICATION

(11) **EP 4 328 842 A1**
(43) Date of publication of application: **28.02.2024**
(21) Application number: 22912789.9
(22) Date of filing: 06.07.2022
(51) Int. Cl.: G06Q 50/06

(54) **AUTOMATED RESIDENTIAL SERVICES AND UTILITIES MANAGEMENT SYSTEM**

(71) Applicant: OBSHCHESTVO S OGRANICHENNOI OTVETSTVENNOSTJU "TSENTR INTELLEKTUALNYKH INITSIATIV", g. Tjumen 625007 (RU)
(72) Inventor: STOLBOV, Pavel Pavlovich, g. Tjumen 625002 (RU); PROSKURA, Polina Dmitrievna, g. Nizhny Novgorod 603155 (RU); BULASHEV, Dmitry Vladimirovich, s. Lugovoe 625507 (RU); VASILEV, Sergei Evgenevich, g. Tjumen 625031 (RU)
(74) Representative: Chimini, Francesco
(86) International application number: PCT/RU2022/000216
(87) International publication number: WO 2024/010482

(57) **Abstract**

The invention refers to a housing and utilities sector automated control system (HUS ACS). The technical result of the claimed invention is automating the management of HUS, improving the efficiency of HUS management, and enhancing the quality of service and operation in the residential and non-residential stock of HUS. HUS ACS includes a management server of HUS ACS; database connected to the management server of HUS ACS; at least one user device containing at least one user interface with the HUS ACS; At least one digital automatic telephone exchange (ATE) of HUS ACS connected to the management server of HUS ACS; at least one automated workstations (AWS) connected to the management server of HUS ACS and digital ATE of HUS ACS; HUS ACS modules connected to the management server of HUS ACS, and such HUS ACS modules are interconnected and include, at least, the following modules: module of organizations, buildings and premises module, emergency shutdown module, dispatch room module, document management module, seasonal inspections module, warehouse module, cost estimate module, resident registration module, telephony module, email module, module of documents, charging and payment module, debtor management module, online cash register module, website module; in addition, these documents are linked to each other so that each current document is linked to its parent and/or child document, and the status of the current document depends on the status of the parent and/or child document; and the user access to the said objects and documents is provided in accordance with the access rights and/or access groups. 1 independent claim, 9 dependent claims, 4 figures.

## Description

### TECHNICAL FIELD

The invention refers to the area of automation in the housing and utilities sector, in particular, to a housing and utilities sector automated control system (HUS ACS).

The presented solution may be used, at least, by the management companies and the residents.

### PRIOR ART

International application WO2019103149 A2 published on May 31, 2019, describes the residence network system for in-residence payment and information communication, which allows to easily make payments at the place of residence, as well as provide various services and collect information using the in-residence information network. The home network system for in-residence payment and information communication includes a home information management device that is connected to a display device. A smartphone can be used to connect wirelessly to a home information management device. The information management device is installed in a residential building, and the residential premises are equipped with a set of sensors. The data obtained by a set of sensors is communicated to the home information management device.

The nearest analog is referred to in patent US11354443 B2 published on June 7, 2022, which describes a system and method for providing customizable property management services that improve transparency and communication. The invention relates to the area of customer management and, in particular, to the customer management and customer service platforms that enable management companies to create a customizable, transparent environment by providing a forum for customers and clients to engage and communicate effectively with all groups, members and tenants in a virtual space. The method involves a graphical user interface linked to an electronic device for obtaining user credentials to access a digital application for providing property management services, and such electronic device is connected to one or more secondary electronic devices through one or more servers. In addition, the method includes authentication of the user's identity using a processor connected to an electronic device, and such authentication includes determining the type of user for the user. The method also involves providing the user with access to a digital menu configured for the user type, and displaying the digital menu to the user using a graphical user interface.

However, this solution lacks the interconnected modules, such as buildings and premises module, emergency shutdown module, dispatch room module, document management module, seasonal inspections module, warehouse module, cost estimate module, resident registration module, telephony module, email module, module of internal documents of the management company (MC), module of work and service certificates, charging and payment module, debtor management module, online cash register module, module of HUS ACS user website, module of document typology settings, which enable more efficient automation of HUS management.

The technical problem that this invention seeks to address is to enable the automation of HUS management, which will improve the efficiency of HUS management.

### TERMS AND ABBREVIATIONS

The following terms and abbreviations are used in the description of the invention:
**HUS ACS (Housing Standard ACS (HS ACS))** means automated control system for housing and utilities sector
**MC** means a management company, management organization, or homeowner association (HOA) in the area of managing/maintaining multiple dwelling units (MDUs);
**EDS** means emergency dispatch service;
**MDU** means a multiple dwelling unit;
**MA** means a mobile application;
**ATE** means an automatic telephone exchange;
**HUS SIS** means a state information system of the housing and utilities sector;
**PA** means a personal account;
**IM** means an individual meter;
**CM** means a communal meter;
**OKTMO** means All-Russian Classifier of Territories of Municipal Entities;
**CR** means cash receipt;
**Rosreestr** means the Federal Service for State Registration, Cadastre and Cartography;
**UP** means a utility provider;
**EGRN** means the Unified State Register of Real Property;
**FIAS** means Federal Information Address System.

### SUMMARY OF THE INVENTION

The technical result of the claimed invention is automating the management of HUS, improving the efficiency of HUS management, thereby enhancing the quality of service and operation in the residential and non-residential stock of HUS.

The said technical result is achieved by the following:
The automated control system of the housing and utilities sector (HUS ACS) includes at least the following:
management server of HUS ACS;
database connected to the management server of HUS ACS;
at least one user device containing at least one user interface with the HUS ACS;
At least one digital automatic telephone exchange (ATE) of HUS ACS connected to the management server of HUS ACS;
at least one automated workstation (AWS) connected to the management server of HUS ACS and digital ATE of HUS ACS;
HUS ACS modules connected to the management server of HUS ACS, and such HUS ACS modules are interconnected and include, at least, the following modules: module of organizations, buildings and premises module, emergency shutdown module, dispatch room module, document management module, seasonal inspections module, warehouse module, cost estimate module, resident registration module, telephony module, email module, module of documents, charging and payment module, debtor management module, online cash register module, module of HUS ACS user website;
moreover, the objects of the organizations module and objects of the buildings and premises module are linked to the documents of the following modules: emergency shutdown module, dispatch room module, document management module, seasonal inspections module, warehouse module, cost estimate module, resident registration module, telephony module, email module, module of documents, charging and payment module, debtor management module, online cash register module, website module; in addition, these documents are linked to each other so that each current document is linked to its parent and/or child document, and the status of the current document depends on the status of the parent and/or child document; and
user access to the said objects and documents is provided in accordance with the access rights and/or access groups.

In the system, the dispatch room module may include, at least, a request module and a task module.

In the system, the modules of documents may include, at least, a module of internal documents and a module of work certificates.

HUS ACS may additionally include a module of document typology settings of HUS ACS modules.

HUS ACS may also include a reports and analytics module, and HUS ACS modules communicate data to such reports and analytics module.

HUS ACS may be integrated, at least, with the following external services: the information systems of housing and utilities sector, information address systems, accounting systems, tax accounting systems, acquiring systems, telemetry systems, SMS messaging services, voice services, virtual telephony, mail services, unified state register of legal entities, cloud services, including at least cloud-based online cash registers and cloud-based data storage.

In the system, the digital ATE may be additionally connected to a call center.

In the systems, the objects of the organizations module may include the organizations and the objects related to the organizations; and the objects of the building and premises modules may include the buildings, objects related to the buildings; premises, objects related to the premises.

In the system, the users of HUS ACS may be the residents of buildings and organizations of at least the following types: management company, insurance company, court, bank, counterparty, supervisory authority, military commissariat, executive authority, registration authority.

In the system, the user interfaces of HUS ACS may be at least the graphical user interfaces of the following: a resident's mobile application, HUS ACS customer's employee's mobile application, HUS ACS user's website, and web interfaces.

### DESCRIPTION OF DRAWINGS

The embodiment of the invention will be described below in accordance with the accompanying drawings, which are presented to explain the essence of the invention and in no way limit the scope of the invention.

The claimed invention is illustrated in Fig. 1-4, which show the following:
Fig. 1 shows an example of communication of HUS ACS with the users.
Fig. 2 shows an example of links between HUS ACS modules.
Fig. 3 shows an example of links between the documents of HUS ACS modules.
Fig. 4 shows an example of the general diagram of a computing device for HUS ACS implementation.

### DETAILED DESCRIPTION OF THE INVENTION

The following detailed description of the invention's embodiment provides numerous details of the embodiment in order to ensure a clear understanding of the present invention. However, to those skilled in the art, it will be obvious how the present invention could be used, whether with or without these details of its embodiment. In other cases, the well-known methods, procedures, and components have not been described in detail to avoid overcomplicating the understanding of this invention's features.

In addition, the above presentation will make it clear that the invention is not limited to the presented embodiment. Numerous potential modifications, changes, variations, and substitutions, that retain the essence and form of this invention, will be obvious to those skilled in the art.

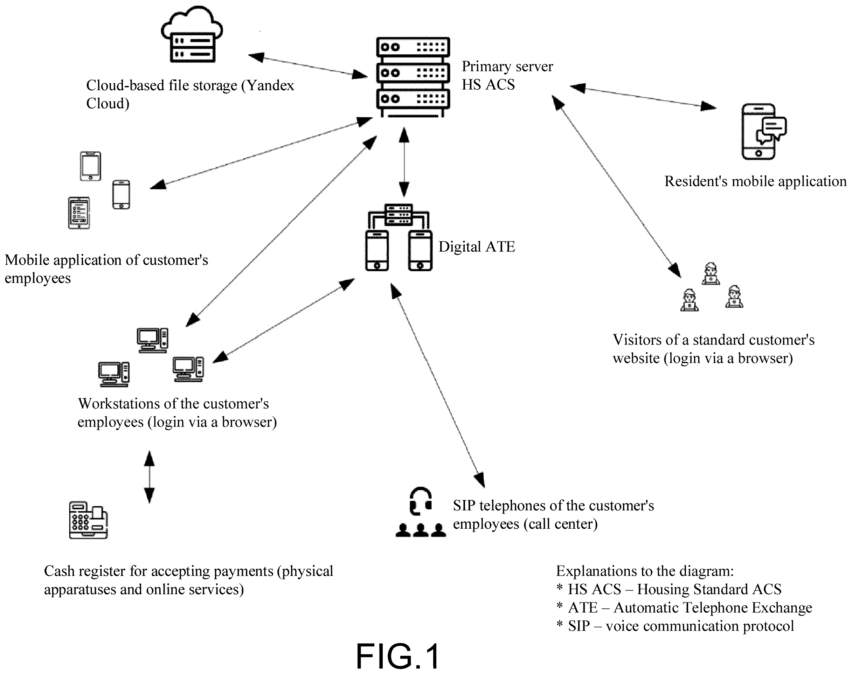

This invention describes an automated control system of the housing and utilities sector (HUS ACS). HUS ACS includes a management server; a database, user devices containing interfaces between HUS ACS and system users, a digital automatic telephone exchange (ATE), and one or more automated workstations (AWS). The management of HUS ACS is provided by using the management server. The data of HUS ACS is stored in the database which is connected to the management server. Digital ATE connected to the management server is designed to provide HUS ACS customers with various telephony services. The users communicate with HUS ACS via user devices that include a user interface for HUS ACS and are connected to the management server. Automated workstations connected to the management server and digital ATE are designed to ensure the work of HUS ACS customers (for example, the MC employees) with HUS ACS (for example, when the MC employees record the communications from residents of buildings that are served by the MC, set tasks, etc.), incoming and outgoing calls (Fig. 1).

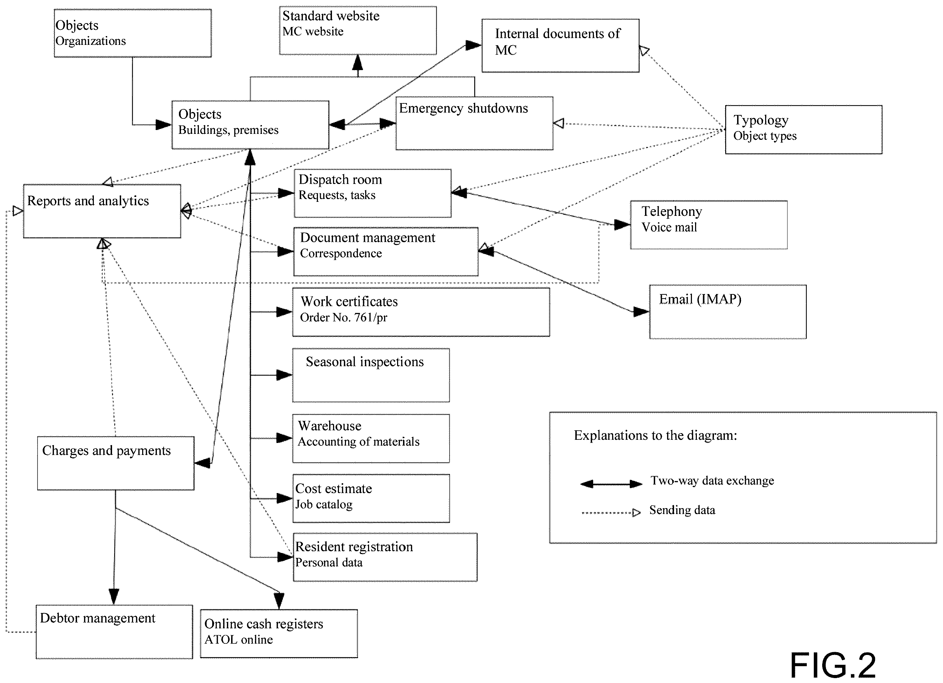

In addition, HUS ACS includes the following interconnected modules, which are connected to the management server of HUS ACS: module of organizations, module of internal documents of HUS ACS customer, buildings and premises module, emergency shutdown module, dispatch room module, module of HUS ACS customer document management, modules of work certificates, seasonal inspections module, warehouse and materials module, cost estimate and job catalog module, resident registration module, telephony module, email module, charging and payment module, debtor management module, online cash register module, reports and analytics module, module of document typology settings, module of HUS ACS customer's website (Fig. 2).

One of the basic principles of HUS ACS is the connectivity between objects and documents, connectivity between documents and interdependence (transitivity) of document statuses, as well as the differentiation of access rights to objects and documents. In ACS, all documents retain links to other documents (parent and child documents). The objects of the organizations module and objects of the buildings and premises module are linked to the documents of the following modules: emergency shutdown module, dispatch room module, document management module, seasonal inspections module, warehouse module, cost estimate module, resident registration module, telephony module, email module, module of documents, charging and payment module, debtor management module, online cash register module. These documents are linked to each other so that each current document is linked to its parent and/or child document, and the status of the current document depends on the status of the parent and/or child document. User access to the said objects and documents is provided in accordance with the access rights and/or access groups. A corresponding log (e.g. request log, task log) is kept for each type of document (e.g. request, task).

### Objects of the organizations module

The objects of the organizations module are organizations and objects linked to organizations (e.g., documents, settlement accounts, employees, etc.) The organizations module is used to enter the information on organizations of various types, such as MC, UP, Court, Bank, Counterparty, Supervisory Authority, Military Commissariat, Executive Authority, Registration Authority, etc. If the required organization is not included in HUS ACS, it can be added to the database. When adding an organization, it is necessary to specify its name and type. The organizations can be added by using a standard form for creating a record of organization. Two or more MCs may operate within a HUS ACS.

### Objects of buildings and premises module

The objects of buildings and premises module are buildings and premises and objects linked to buildings and premises (e.g. entrance, apartment, elevator, communal meters, individual meters (IM), apartment meters, personal accounts (PA), settlement accounts, address-forming elements (e.g. population center, street, house, etc.). The buildings and premises module is used for entering the information about buildings and premises. A building is a fundamental element in HUS ACS. A building means any structure that is serviced by an MC. A building can be of various types, e.g. a residential building (RB), multi-dwelling unit (MDU), office building, household outbuilding (e.g. barn), etc. In most cases, the buildings created in HUS ACS are of the MDU type, as this is the main type of buildings served by management companies (MC). A building in HUS ACS is an object and has all properties that are typical for objects in HUS ACS.

A list of previously created buildings is available in HUS ACS. A user can see all buildings that such user is entitled to access in accordance with the settings of HUS ACS. In most cases, the right to view information about a building is assigned to the user based on the user's affiliation with the management company. For example, a user can have two management companies specified in HUS ACS as a place of work. Overall, there are three management companies operating at HUS ACS. Therefore, in the list of buildings, the user will see all buildings that have the MC field filled with the name of one or the other MC, where such user is an employee, and the user will not see the buildings of the third MC, which has no relation to the user.

A user can view the list of buildings, create a new entry for a building in HUS ACS, run a procedure to check if the FIAS numbers listed for the buildings in HUS ACS are current, filter the list of displayed buildings depending on the filtering options, control the number of buildings displayed on one page of the list, customize the list of buildings, and export the generated list of buildings to a file in the selected format, such as PDF or Excel.

A building card with detailed information about the building is available for viewing. When viewing information about a building, the user can find all information related to it, depending on the rights that the user has in HUS ACS. If a user does not have the right a certain information, that information will not be displayed for such user.

The building card contains the following information: building type; management company (according to the applicable management contract); minimum and maximum number of floors (according to the electronic passport of the building); total number of premises (residential and non-residential premises) the records of which were created in HUS ACS; number of residential premises (apartments) the records of which were created in HUS ACS; number of non-residential premises the records of which were created in HUS ACS; area of the building according to the passport, area of residential premises, area of non-residential premises, total area of premises that are part of the communal property in a multi-dwelling unit, total area of communal premises in a multi-dwelling unit - this information about the area is communicated to HUS GIS and can be used for charging purposes; basement area, attic area - this information about the area is communicated to HUS GIS and can be used for charging purposes to calculate the payment for communal property maintenance; date of commissioning the building; year of the building's construction; court (the organization can be entered from the list of organizations with the "Court" type, which are stored in the organizations module, and then be used to prepare claims for small amounts not exceeding the specified threshold); court (large claim) - the organization can be entered from the list of organizations with the "Court" type, which are stored in the organizations module, and then be used to prepare claims for large amounts exceeding the specified threshold; military commissariat (the organization can be entered from the list of organizations with the "Military Commissariat" type, which are stored in the organizations module); payment document template - all templates created in HUS ACS are available for selection, if the payment document template is not specified, then the default template is used to generate receipts; code of the building according to FIAS (used to establish the initial connection between the object in HUS ACS and HUS SIS); OKTMO (used to exchange data with HUS SIS, the correctness of entered data is verified during the data exchange with HUS SIS, if an incorrect value is entered, then no data will be exchanged between HUS ACS and HUS SIS for such building); cadastral number (communicated to HUS SIS, if the value is available, the building is linked to the object record in FIAS); postal code; land plot (cadastral number); land plot (area).

A user can perform the following actions with the building viewed in HUS ACS: edit information about the building; delete building from HUS ACS, a building can be deleted only if there are no objects related to such building in HUS ACS; if there is any object (apartment, entrance, etc.) linked to building in HUS ACS, the record of the building will not be deleted from HUS ACS; edit information about the building posted on the Internet; change MC, open turnover balance sheets in various forms, bulk generate the guides for installation and use of resident's mobile application for all owners of personal accounts from such building.

A user can open the following desired information about a building: addresses (list of synonyms for a given building from address-forming elements); entrances (list of entrances in a given building); residential premises (list of residential premises in a given building); non-residential premises (list of non-residential premises in a given building); elevators (list of elevators located in a given building); structural elements (list of structural elements in a given building); engineering systems (list of engineering systems in a given building); requests (list of requests received from residents of a given building); chargeable requests (list of chargeable requests received from residents of a given building); tenants (list of individuals residing in a given building); personal accounts (list of personal accounts opened for residential and non-residential premises of a given building); information disclosure (list of data obtained from the Internet, e.g. from the website on HUS reform); communal meters (list of CM, the installation sites of which match the viewed building); individual meters (list of IM, which are linked to the personal accounts opened in the viewed building); reports (reports with information about a given building); scheduled works (list of works on a given building scheduled using seasonal inspections module and cost estimate module); incoming correspondence (list of incoming messages registered in HUS ACS and indicating a given building as the sender address); outgoing messages (list of outgoing messages registered in HUS ACS and indicating a given building as the recipient address); tariff schedule (a list of tariffs that were assigned to a given building); charges (information on checking the integrity of data related to objects involved in charges).

When creating a record of a new building in HUS ACS, the information about the street where the building is located and the building number is mandatory. Once all required fields are filled out, the user will save the completed information and a record of the new building is added to HUS ACS. If the building record is successfully created, the user can view the completed information about the building.

The procedure for checking the relevance of FIAS can be started from the page for viewing the list of buildings. This procedure involves comparing the FIAS numbers specified for buildings in the ACS with the relevant FIAS number database. Once the procedure is completed, the FIAS field of each building will display the current status. Important: The procedure does not involve checking whether the FIAS number and building address match.

HUS ACS implements a mechanism for generating the information about a building, such as records of entrances and apartments in a MDU, based on the characteristics of the building obtained from the Internet, e.g., from the website on HUS reform.

HUS ACS allows to automatically create a record on the required number of entrances, apartments for the desired set of buildings. This tool also allows to distribute all created records of apartments by created entrances with the option for distributing the apartments proportionally (i.e. with the same number to each of the entrances) or in accordance with a specified interval. In case of selecting the option with intervals, the user must select a building for distributing the apartments by entrances and specify the apartment numbers for each entrance. If the procedure is successfully completed, each apartment will have a link to the appropriate entrance.

HUS ACS allows to import the information about a building from files of various formats. A user can either download a template file with no data previously entered into ACS or download a template with data after selecting the management company, for which such data is required. In the file downloaded to the user's device, the user can enter the main characteristics of the buildings, which then will be imported into the HUS ACS.

HUS ACS allows to import data previously entered in HUS SIS. If no records were previously created in HUS ACS, the user must upload a list of buildings after selecting the management company for which the import will be performed. This procedure will create in HUS ACS the records of all buildings, the information about which was previously posted in HUS SIS on behalf of the selected management company. Next, in order to import detailed data about the buildings from HUS SIS, the user must select the desired MC and a set of buildings. It is also necessary to tick the types of objects that need to be imported from HUS SIS and created in HUS ACS. If only the identifiers are uploaded, no new objects will be created in HUS ACS, but a procedure will be performed to match the objects in HUS SIS and in HUS ACS.

Exporting information about building to HUS SIS. The information about buildings posted in HUS ACS can be exported to HUS SIS. The procedure for exporting data to HUS SIS is advisable if the data in HUS ACS is better in terms of quality and completeness than in HUS SIS. The information can be exported if the building has a FIAS identifier in HUS ACS. Next, it is necessary to select the desired MC, a set of buildings, for which the data will be exported to HUS SIS. It is also necessary to specify the types of objects to be sent to HUS SIS.

Bulk generating user guides for the resident's MA. In order to generate the guides with the access code for the resident's mobile application, HUS ACS has a feature for bulk generating such user guides. A generated zip-archive containing the files with the user guide for each personal account, the record of which is available in HUS ACS, will be downloaded to the user's device. Each user guide includes QR codes with links to download the application, as well as personal QR codes for authorization in the mobile application.

The standard website of the management company displays the coordinates of the buildings serviced by the management company on the city map. The interface for specifying these coordinates is available in the settings in HUS ACS. This allows to automatically download such coordinates from the Internet (e.g., from the website on HUS reform). This also allows to specify the coordinates of a particular building using the map, where it is necessary to find the location of the building and set the icon at the appropriate place on the map, and then save the coordinates.

Personal accounts are created by completing the information (e.g., personal account number, information about premises, information about residents, information about individual meter and communal meter, etc.) in the personal account record form. When viewing a personal account card, a user can see general information about a PA, all ACS documents related to the issues of charges on a selected PA (such as payment documents, payments, recalculations, etc.), information about all tariffs that have applied to such PA since its creation, external identifiers that contain information about all links with external information systems about such PA record in HUS ACS. The external identifiers are used to exchange data between HUS ACS and external information systems (services).

HUS ACS can be integrated with various external services, such as information systems of the information systems of housing and utilities sector, information address systems, accounting systems, tax accounting systems, acquiring systems, telemetry systems, SMS messaging services, voice services, virtual telephony, mail services, unified state register of legal entities, cloud services (e.g., cloud-based online cash registers and cloud-based data storage).

A PA can be closed using the PA closing form, in which the following information must be entered in a step-by-step manner: specifying the closing date (the last day of services for PA); specifying which of the counterparties will be the recipients of debts for services where the charges are not paid; entering readings of all metering devices. It is also possible to edit PAs, split the current PA into two new personal accounts, merge personal accounts, import and export PA data, and export personal account data to HUS SIS.

### Dispatch room module

Dispatch room module includes request module and task module. The request module is designed to keep a log of communications received by the emergency dispatch service from the residents of the serviced residential stock on matters within the responsibility of MC in accordance with the management contracts.

The request log can be accessed by the employees with a "permission" granted in the ACS, e.g., employees with HUS ACS administrator rights. The list of requests available for viewing depends on the settings defining the relation of the employee to the residential stock in accordance with the access groups. If an employee is responsible for working only within a part of the company's residential stock and these settings are defined in the employee's personal account in HUS ACS, such employee will not have access to view those requests in the request log that are related to the residential stock where the employee is not working.

The general view of the request log is based on the same principles as all other logs in HUS ACS. All items of the log are sorted by the time of their creation in the descending order. The displayed columns of the logbook are customizable by the user of HUS ACS. The request log will take on the view configured by the user and will remain unchanged until the user edits the list and sequence of columns again. The number of log items displayed on the page is set by the user and can be, for example, either 25, or 50, or 100 items per page. This setting is individual and applies only to a specific log and how it will be displayed to a specific user. When necessary, the contents of the log can be imported into files of various formats, such as *.pdf or *.xlsx. The list and order of columns in the generated file will correspond to the settings specified by the user for the log in HUS ACS. A user can filter the items in the log to display only the desired items.

Filtering the list of requests. A user can use filters and search across an unlimited number of fields. For example, it is possible to specify the dates of request creation (a range of dates) and specify the address from which the request was received. As a result of the search, the request log will display for the user only the requests received from the specified address within the specified period. Once the user specifies all search parameters and applies them, the specified search parameters are stored in the log until a new search is performed or the search parameters are reset. Those search parameters that may be useful to the user in the future can be saved as a standard search query. To do this, it is necessary to set the parameters and save the filter. All previously saved filters will be available in the filter box. They can be removed, as needed.

Viewing information on the request in the request log. The log is based on the principle "one request - one log line". All columns have headings, such as the request number; creation time (exact time and day when the request was entered into the ACS); content (information about the substance of the request); address (address is displayed in the recorded form, and ACS allows to save requests, either by indicating the specific apartment from which the request was received, or only the building where the problem is observed); type of request; requestor (recorded information about the resident from whom the communication was received); convenient time (displays information about a convenient time for a visit to resolve the request); performer (this displays information if a task was assigned in accordance with the request and displays the task performer, and if two or more tasks were assigned, then this field will display all performers of the tasks assigned in accordance with the request); comment (this displays all comments posted to a given request, and if a task was assigned in accordance with the request, this field displays information about the task number); author (this includes information about the user who created the request); date of status change (this displays information about the day when the request was assigned its current status); status (this displays the current status of the request).

In addition, the following functions are available for using the request log: opening a request card; viewing information about the request in a pop-up window (this information is more detailed than the one displayed in the log and contains details about the chain of documents associated with the request, the information displayed in this window does not depend on the personal settings of the user log); instant transition to the request editing page.

All logs that have more items than can be displayed on one page have a pagination panel. The pagination panel is placed after all items on the page. If a user configured the log to display 50 or 100 items per page, the pagination panel is duplicated before the list of items at the top of the page. The pagination panel allows to jump to one of the nearest pages, or go to the beginning/end of the log.

Handling a request log from external sources. In HUS ACS, the dispatch room module has an additional function of using a request log from external sources. This log displays the requests from residents received from the standard website of MC, resident's mobile application, as well as voice mail based requests.

The appearance of the log is identical to that of the other logs in the dispatch room module. The users can also sort the contents of the log by selected parameters, display the desired number of items per page (e.g., 25, 50, 100) and download the contents of the log to files of various formats. The log has also the additional information about the source of the request. Moreover, the users can specify the source of the request when creating a request.

Creating a request. In HUS ACS, a request can be created in several ways: automatically, based on data entered by the resident through the resident's personal area on the MC website; automatically, based on data entered by the resident through the resident's mobile application; manually through the web interface without using ATE; manually using ATE.

All users of HUS ACS who have permission to create records of new requests in HUS ACS can see the request creation button. This button is available only to users with the Dispatcher role. Other users of HUS ACS will not see this button.

Request field "No.": HUS ACS automatically assigns a number to the request after the request is created. However, if the user wants to reserve a certain number when creating a request, the user should click the appropriate button.

Request field "Creation Time": This displays information on the creation time of the request. When necessary, the user can adjust the creation time. The time is recorded according to the time zone that is specified in the HUS ACS settings.

Request field "Status": This displays the lifecycle stage of the request.

Request field "Priority": This displays whether a given request has a priority status. The priority of the request applies "end-to-end", that is, a priority set by one user remains the same for all users.

Request field "Address": This is where the user must, in a step-by-step manner, complete the address where the problem situation described in the request is observed. In the HUS ACS, the address is multi-level. In the request creation form, the user is prompted to complete the address from the level with two or more items. For example, if the entire residential stock is concentrated in one city, the City level in the address field will be populated automatically. If the entire residential stock, to which the employee has access, is on the same street, then this level will also be populated automatically.

In general, the address field has the following levels: population center (city, settlement); street; building number; premises number. Other levels of the address can be added to HUS ACS. This may include, for example, the region or micro-district. The Premises field allows to select both residential and non-residential premises located in the previously selected building. When creating a request, the address field must specify at least the building, where the problem situation is observed. It is desirable to complete the address in full, all the way down to the apartment. In this case, the colleagues processing the request will find it easier to communicate with the resident who submitted the request.

Request field "Requesting Individual": This field must specify the individual submitting the request. When selecting an apartment in the address field, HUS ACS displays a list of residents whose information was previously entered in HUS ACS, as well as telephone numbers associated with the given premises. A user can either select one of the suggested residents, or use the record creation form to add a new resident to the database. In this form, the user can complete the following fields: Surname, name, patronymic, date of birth, mobile telephone number, email address. The only required field is "Surname".

Once the requesting individual is selected, HUS ACS will display information on that resident, including the amount of debt on the personal accounts owned by the requestor (the "Debt" field is informational and is populated automatically); telephone number associated with the resident and the address of the premises where the individual resides.

Request field "Telephone": This is the field where the system automatically inserts a value if the resident's record was created using the form for adding records to the database and such form has a completed field "Mobile Telephone", and if the telephone number was identified by ATE, and the request is created while processing an incoming call. If the user of HUS ACS is identified on the ATE line, clicking the telephone number of such user will initiate an outgoing call.

If, when creating a request, the user selects a requestor from the suggested list, HUS ACS will display information on all telephone number associated with such resident. When the user clicks the telephone number, such telephone number is automatically inserted in the "Telephone" field.

If the field is empty, it can be completed manually. HUS ACS has no pre-defined format for telephone numbers. When saving the telephone number, HUS ACS will remove unnecessary characters. Moreover, when using a telephone number to send SMS and/or make automated calls, HUS ACS will automatically convert such telephone number to the required format.

If the automatically inserted telephone number is not relevant for a given request, the user can enter a new number in the "Telephone" field. At the same time, if the "Update for Resident" checkbox is selected at the end of the line, the entered telephone number will be saved as the current number of the selected resident. If the checkbox is not selected, then the number will be saved only for the request, and the telephone number property of the resident's record will keep the same value that it had before the request creation.

Request field "Requesting Legal Entity": This field must specify the legal entity submitting the request. The field is used to search by organizations included in the organizations module. If the desired organization is not available in HUS ACS, it can be added to the database.

Request field "Content" is designed for entering the textual information about the substance of the problem situation, for which the request is created. The text entered in this field will be inherited into the task set later for that request. The entered description must be as accurate as possible and the user should keep in mind that this description may be available to the requestor through the resident's personal area on the MC website and may also be sent in the text of the informational SMS about the progress of the request processing.

Request field "Type" is designed to categorize the request by a specific type. It is important to remember that the access rights to view the request, as well as the automatic assignment of tasks for processing the request depend on the correctly defined type of the request. The deadline for the request processing also depends on the type of request.

Request field "Emergency" serves to label certain requests as emergency requests, which affects their priority in the ACS and the deadlines for their processing, as well as the selection of the task performer in case of using the automatic definition of tasks.

Request field "Task Performer": This field may be used to specify the employee to whom the task will be automatically created and assigned. As a result, the dispatcher will not be required to manually create a task after saving the request.

Request field "Visit Time Convenient for the Customer" has the "Date" format plus a time slot within the selected date. This field must be completed if the works on the request require to visit or meet the requestor, for example, if the works are expected in the requestor's apartment.

Some request types can be marked as "always emergency", when this type is selected (e.g., for such in-house utility equipment as the heating system), the request will be automatically assigned the status with the value "emergency", without the possibility of removing such value.

If a request has a completed field "Convenient Time for the Visit", and this time will be later than the automatically calculated deadline for request processing, then the value from the field "Convenient Time for the Visit" will be inserted in the field "Deadline for the Request Processing".

The next set of fields describes the permissions that the resident can give to the management company to communicate with the resident.

Request field "I agree to receive SMS notifications" reflects a previously given/not given permission to receive SMS messages sent from MC on the progress in processing the request submitted by the resident, as well as about the emergency disconnections in the building.

The field "Send Link to the Application" displays a given/not given consent to receive informational SMS message with an invitation to use the resident's mobile application.

The user should complete these fields only if the Management Company is using the SMS connected to HUS ACS.

If a resident has previously given consent to receive notifications from MC, and this information has been recorded in HUS ACS, the user will receive an "Already Sent" notification.

Request field "Author" displays information on the user who created the record about the request in HUS ACS.

Once all fields of the request are competed, the user saves the request, which will create a record of a new request in accordance with the completed fields. If for some reason the user decides not to save the request, the user can click "Cancel" to cancel the creation of the request. In the process of saving the request, HUS ACS checks the form for completeness of data, and if the data was entered incorrectly, the user will see the reopened request form, the top of which will display a notification of errors that need to be corrected. In such case, the user will need to correct the errors and save the request again. Once the request is successfully saved, the user will see a page for viewing the created request.

The following actions with the request are available to the user: edit the request; delete the request specifying the reason for deletion; create child documents in relation to the request, including tasks and emergency shutdowns; change the request status (select a status from the list of available statuses which may be assigned to the request); open a form for creating a paid request; copy the request; reject the request; print work orders of child tasks in relation to the request. Deleting a document does not cause it to permanently "disappear" from HUS ACS. All deleted documents remain in HUS ACS, but are not displayed in the log in the normal log view mode. The deleted documents can be viewed only by activating the "Show Deleted Documents" function in the log filters. The deleted document can no longer be processed in HUS ACS, as it is available only in view mode. A user should also keep in mind that, if a request has open child tasks, such request cannot be assigned the status "Rej ected" and the status "Closed". In addition, when creating a paid request, all available characteristics of the paid request will be inherited from the current request, and at the time of saving the paid request, the current request will be assigned the status "Rejected" with the comment "Created a paid request: Request No. XX". If a request has the status "Closed", then there will be additional option to enter information on the results of quality control.

The request section "History of request status change" displays information about how and when the stage of the document life cycle was changed. For example, on March 29, a document was created by the user "Chief Administrator" through the web interface of HUS ACS, then on March 30 the document was automatically assigned the status "In Progress" based on the task definition for that request. On the same day, the request was automatically assigned the status "Closed", because the performer reported through the MC employee's mobile application that he had "Installed the light bulb" and assigned the status "Closed" to the child task.

The request section "Document Links" displays information about the documents that have links with the viewed request. A required feature is the ability to navigate to the card of any linked document.

The request section "Telephone Calls with the Caller" displays all cards of the telephone calls between the MC and the caller during the specified period, e.g. +/-2 days from the time when the current request was created.

The request section "Attached Files" displays all files that were attached to the request or generated in HUS ACS for a given request. This section displays each file on a new line. The information about the file contains, for example, the name of the document and its format; the file size; the name of the user who saved/created the file; the date and time when the file was created/saved. The files can be viewed in the browser, downloaded, or deleted.

The request section "Comments" displays all comments relevant to a given request that have been submitted by the users of HUS ACS. Each comment contains fields, such as text content; time and date of leaving a comment; status (important/ordinary comment); files that were attached to the comment. This section displays not only the comments left by users directly on the viewed request, but also all comments that have the status of "Important" and are related to the objects involved in the request (premises, requestor).

Along with the previously left comments, the system also opens a field for new comment. A user can write text in the "Text of the Comment" field, check the "Important Comment" box, attach a file if necessary, publish a comment, and share the entered information with colleagues.

The request section "SMS" displays all SMS messages sent in relation to the viewed request. The section is displayed if any SMS was sent in relation to the request. The record of each SMS message contains information about the time of sending; the current delivery status of the SMS message, the phone number to which the SMS message was sent, the content of the SMS message, and the system identifiers of the SMS message.

The request section "History of Events" displays the time and nature of all actions that users performed on the request. Each action is characterized by the action; the property that was modified when the action was performed; the user who performed the action; the source used to perform the action; the date and time when the action was performed. All actions are displayed in chronological order (from latest to earliest).

The request section " Access rights" is available for viewing only for users with the rights of the HUS ACS administrator. The section contains information on what access groups are allowed to view the document. The administrator can change the access groups by adding or removing groups from the access list.

The users, who were granted the right to edit requests in HUS ACS, will see an edit button on the page of each request. All changes, their time, and the user who made them will be saved in HUS ACS and displayed in the section "History of Events". The records in this section cannot be deleted. Therefore, if the changes are intended to falsify the data in the HUS ACS, this fact will be easily detected. The requestors and the performer of the task will receive SMS messages and push notifications about all changes related to their requests.

The request editing form is identical to the request creation form. There are no restrictions on modifying the information in the fields. Once the desired changes are made, the user will saves them, after which the request will be deemed to be edited. If while making changes the user for some reason decided not to save the entered data, the user can cancel the changes.

In HUS ACS, the users can copy a created request. This functionality will be useful if multiple requests of different types need to be created for the same premises. Another case is when the same problem is observed in several premises. Copying a request will open a request creation form which is already prepopulated with data from the copied request. The user only needs to edit the required fields and save the request.

The procedure for closing a request means recording in HUS ACS that all works necessary to process the request have been completed.

Depending on the rights to perform actions in HUS ACS, the users can close the request either through the procedure of changing the status of the request, or by setting and subsequently closing a task. A request can be closed by changing its status only if no child task has been created for such request earlier. If a task was created, the user will see a notification that the request cannot be closed, because its child documents are not closed. If the request has no child documents, then a box for required comment will be displayed to the user. Once the required comment is entered, the status of the request can be changed to "Closed".

The procedure for removing a request from HUS ACS may be necessary if, for any reason, an erroneous request has been created in HUS ACS. This may happen, for example, when, due to poor internet connection, a user has mistakenly created two identical requests. In this case, in order to make sure that the request is neither displayed in the request log nor considered for the purposes of statistics on the volume and quality of performed works, the request must be deleted from the HUS ACS. Deleting a request also requires to enter a comment indicating the reason for deleting the request.

The procedure for rejecting a request is designed for those cases where, for some reason, the performance of such request has become irrelevant. This may happen, for example, when the requestor asked not to perform the works on the request, or it turned out that such works were not required. In order to reject a request, the user must change its status to "Rejected". In the case when a task set for the request was not assigned a completion status, HUS ACS will respond to the above steps with a message that the request cannot be rejected. If there were no child documents created for the request, HUS ACS will prompt the user to enter a comment and confirm the rejection. Such comment is required. The rejected document will continue to be displayed in the request log, and the user can continue processing the rejected document, as all action buttons will available and the document can be returned to processing.

In a situation where the requestor left a request, which in the course of its processing turned out to be beyond the scope of obligations assumed by MC under the management contract, the user of HUS ACS, acting in agreement with the requestor, can create a paid request in ACS based on the previously submitted request. To do this, the user must click the "Make Paid Request" button on the page for viewing the previously created request. This will open the form for creating a paid request, which will inherit the data from the earlier request. The following will be inherited from the request: address; requestor; telephone number; content; convenient time. All the user has to do is to check the relevance of entered data ( e.g., a convenient performance time may have already passed and ACS will not allow to save such request), as well as to enter the types of required works. After entering all data, the user will save the paid request. HUS ACS will create a record on the new paid request, and the earlier request will be assigned the status "Rejected" with the comment "Created a paid request: Request No.".

If the function for automatic creation of tasks by specialists in charge is not activated in HUS ACS, the task must be created manually. On the page for viewing the request, it is necessary to create a task, after which the system will open the form for creating the task with the following fields.

Task field "Performer" defines the employee assigned to perform the task.

Task field "Content" automatically copies the content from the request. But the user can change it. If the user adds new text to a previously saved text, the text format will be as follows:
new text about the task
***
old text from request

Task field "Address" is inherited from the request and may be changed when needed.

Task field "Requestor" is inherited from the request and may be changed when needed.

Task field "Telephone" is inherited from the request and may be changed when needed.

Task field "Visit Time Convenient for the Customer" is inherited from the request and may be changed when needed. This must be later than the current time.

Task field "Performance Deadline" is calculated automatically. This field is completed based on the time limits established for that type of documents in the "Typology" module.

Task field "Counterparty-Performer" may indicate a third party contractor assigned to perform the task. A completed "Counterparty-Performer" field does not cancel the requirement to complete the "Performer" field. All organizations accessible to the user are available for selection.

Task field "Participants" is completed, if the task involves teamwork. In this case, the main person in charge is entered in the "Performer" field, and others in the "Participants" field. The "Participants" field can be populated with multiple values. The user specified as a task participant is granted the right to view and interact with the task.

Task field "Creation Time" is automatically populated with the current time. This field is available for editing by the user.

Task field "Attach File" allows to attach an unlimited number of files to the created task.

Task field "Clear" allows to remove all attached files.

Once the task creation form is completed, the user must save the task and a record of the new task will be created in HUS ACS, and the user will see the page with the task card. If the user decides not to perform the specified action while creating a task, the user can cancel the creation of the task.

HUS ACS has a functionality that allows to record a feedback about the quality of works performed on the request. This feedback can be obtained in several ways, such as through the resident's personal area on the MC website; through the resident's mobile application; by making automatic calls with ATE; or through the web interface of HUS ACS. For example, when the feedback is submitted through the web-interface, the "Quality Control" button will be displayed to the user who has the rights to submit such feedback. When the user clicks this button, the system will open a form to record the feedback received from the resident. In the field "Resident's Feedback", it is necessary to enter the numerical rating given by the requestor. The rating range is from 0 to 5, where 0 means the request was not processed, while 5 means that the request was processed with utmost quality. In the field "Resident's Comment", it is possible to provide the explanations for the rating given by the requestor. The telephone number of the resident will be displayed for reference. The field "Return for Improvement" allows to select the tasks that were completed within the request and assign them the status "In-progress again". By default, HUS ACS is configured so that when the recorded feedback has the value "Not Processed", all tasks that were performed for the request will be marked as "In-progress again". The value "Operator" should be entered in the "Feedback Source" field. The field "Quality Control Time" displays date and time of the feedback.

HUS ACS implements a tool that allows to assign performers to certain types of work on a given residential stock. This tool allows to automatically assign tasks to those performers who: a) are responsible for performing a certain type of works (type of request); b) are working in the required building; c) are at their workplace at the time of the task deadline.

For example, HUS ACS creates a group of workers and assigns responsibility to it using the form for creating a worker group record. In HUS ACS, a group of workers is a list of employees who perform the same function. These employees are not necessarily part of the same organizational unit or work hand-in-hand.

Field of the form for creating a worker group record "Name" must indicate a user-friendly name for a group of workers. This may be, for example, plumbers, carpenters, handymen, etc.

Field of the form for creating a worker group record "Management Company" must specify the selection of MC, to which belongs a group of workers (as two or more MCs may operate within HUS ACS).

Field of the form for creating a worker group record "Emergency" means that the employees included in this group of workers will work in case of emergency, i.e. an employee from this group will be assigned to process request that has the "Emergency" status and must be processed in non-working hours.

Field of the form for creating a worker group record "Types of Works" allows to add the types of works for which the employees belonging to this group of workers are responsible.

Field of the form for creating a worker group record "Employees" must be used to add all employees involved in performing the above functions (types of works).

Field of the form for creating a worker group record "Senior Employee" must be used to enter the performer who will assigned by HUS ACS to perform the works if any of the performers is absent.

Once the required groups of employees are created, the employees of these groups must be assigned to specific buildings.

The page "Chart of Performers" is used to generate a form for assigning employees to specific buildings. Its lines display all created group of employees; and its columns show all buildings created in HUS ACS.

If the number of buildings created in HUS ACS is significant, a user can control the display of buildings by using the "Street" filter.

The names of the groups help to understand their area of responsibility. For example, there is a group for emergency works, and there are groups of handymen, plumbers, and electricians.

After assigning every building with performers from each group of workers, it is necessary to go to work schedules (working hours), where the working hours can be set for each employee included in the groups of workers. The users can set up the work schedules of employees for each day individually. This function will be useful if an employee works on irregular schedule, or if the duration of shifts for each day is different. Field "Work Schedule Type" sets the frequency of the employee's work. The following types are available for selection: five days of work (working days will be Monday through Friday); six days of work (Monday through Saturday); two days of work followed by two days off (working days will be the first two days counted from the day specified in the "Start Date" field, then working days and days off will alternate with two days of work followed by two days off); twenty-four hours of work followed by three days off (the working day will be the day specified in the "Start Date" field and then, according to the schedule, one day of work followed by three days off); twenty-four hours of work followed by two days off (the working day will be the day specified in the "Start Date" field and then, according to the schedule, one day of work with two days off); daily work. The "Start Date" and "End Date" fields indicate the time interval during which the specified work schedule will be in effect. Field "First Working Hour" specifies the time at which the employee's working day begins; Field "Shift Duration" specifies the amount of time worked per working day (including lunch time). Ticked checkbox "Days off on statutory holidays" means that if the days, that will be calculated as working for the employee according to the configured schedule, fall on holidays, then HUS ACS will assume that the employee is not at work and will not assign such employee to tasks that are within the area of responsibility of such employee and are to be performed on that day. In addition to the working hours, the periods of absence from the workplace can be set for each employee. The reasons may include sick leave or vacation. To do this, it is necessary to go "Work Schedules - Absences" section and add a time interval when the employee will be absent from the workplace. For each employee, it is possible to add multiple periods of absence. The form for adding a period of absence must indicate the range of dates when the employee will be absent and the reason for absence. During the period of absence, the requests expected for assignment to such employee will be assigned to the senior employee of the group. Alternatively, the section "Work Schedules - Replacements" can be used to specify another employee for assigning a request within the time interval specified for the absence of the employee.

The days and time periods of responsibility for work in MDU assigned to employees can be viewed on "Scheduling" tab in the "Performers of Tasks" section. To do this, it is necessary to select the desired group of workers, select the building for viewing the list of assigned performers, as well as the month for displaying the information.

When needed, the user can view a more detailed work schedule by displaying it in the "Week" mode. This mode allows to see the overlapping of time intervals, if any.

ACS has a "Checklist" tool, which allows to "break down" the performance of task into a set of standard actions. This tool is useful in situations where the works require to perform a sequence of well-defined actions. The set of these actions, as well as their properties, can be specified by using the checklist templates.

A template can be specified for a task to be performed for any document type and for within a selected view of any such type. A user can also specify a checklist template for all tasks within a document type or for a document type that contains subtypes. This is an example of creating a checklist for all requests of "In-House Utility Equipment" type. Once the desired type of document is selected, it is necessary to open the form for adding items to checklists, where the "Name" field must specify the substance of the work stage, "Labor Costs (Plan)" field must indicate the number of hours and minutes that the performance of this work stage will take in accordance with the standard, and the "Person in Charge" field may be used to specify the procedure for determining the performer of such work stage.The following alternative options are available in the "Person in Charge" field: Selecting "Task Performer" means that the employee specified by the performer of the entire task will be automatically appointed as the performer of that work stage; selecting "Task Author" means that the employee who created the task in HUS ACS will be automatically appointed as the performer of that work stage; or it is possible to specify a specific performer for all tasks under this type of requests. Each checklist item must be added individually. Previously created checklists are available for editing. There are also the following available actions: Activating the option to drag an item along the hierarchy of items, editing a checklist item, deleting a checklist item, deleting the entire set of checklist items.

If the MC has notified its residents that they can use the mobile application to communicate with the MC, and activated the option to send requests from the mobile application, the residents can submit their requests to HUS ACS on their own.

If a standard website of MC has an activated option to send a request through the resident's personal area, such requests will be created in HUS ACS and displayed in the request log. To submit a request and supporting photo, that shows the substance of the problem, through the website, a resident must log into his/her personal area on the MC website by using such personal account number and use the form "Communications" to enter step-by-step all required information about the problem, namely, the sender's name, telephone number, and briefly describe the substance of the communication. A resident can attach the desired files in .jpg, .png formats, other graphic images, or text files. Once the completed communication form is sent, the resident will see a highlighted notification with the communication number, and the sent request will appear in the request log of HUS ACS.

### Handling tasks in HUS ACS

In HUS ACS, a task is the main tool for allocating the amount of works that the MC must perform as part of its activities. A task can be created for its own purposes, or it can be created under some parent document. The procedure for handling the tasks has certain routines, rules, and limitations.

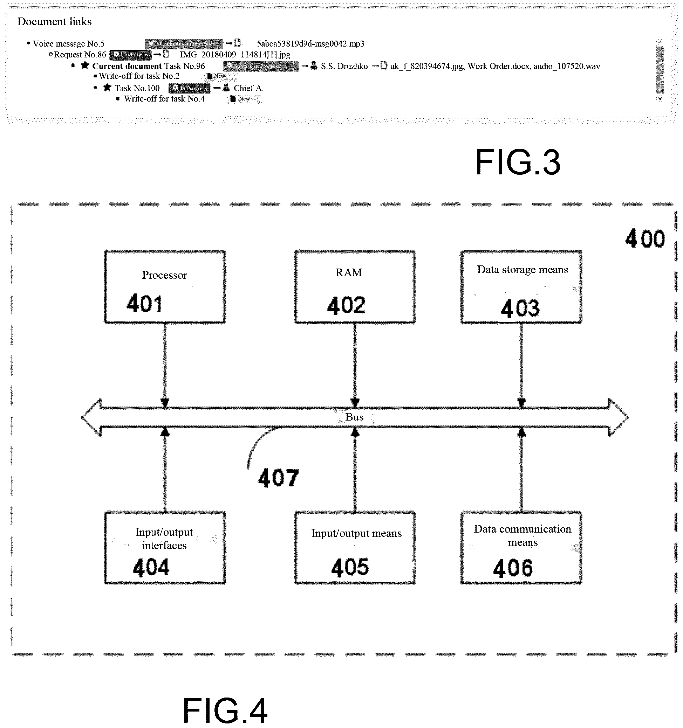

All documents in HUS ACS store links to other documents. A document can be parent or child in relation to the current document. Usually, the tasks in HUS ACS are created on the basis of some document, which prompts to perform some actions described in such task. This can be a request from a resident, an incoming document from a counterparty, a plan of works in the building, etc. In addition, the task itself can generate documents (e.g., subtask, write-off of materials). This results in creating document links. Fig. 3 shows an example of links between the documents of HUS ACS modules (a standard chain of linked documents). The current document (task No. 96) has the status "Subtask in Progress". This task was created by request No.86 (parent document) which, in turn, was created from voice message No. 5 left on the ATE of HUS ACS. A child document (write-off of materials No.2) has already been created for the current task and has the status "New" (i.e. write-off has not yet been approved by the employee in charge).

HUS ACS has the following tools to handle the tasks.

Task log. For the convenience of handling the entire array of tasks and its individual parts, HUS ACS can display the task log in a variety of content forms.

Sublog "Tasks" displays all tasks which have ever been created in HUS ACS and which the user is allowed to access.

Sublog "Tasks assigned to me" displays all tasks where the user is listed as a performer or participant in the task.

Sublog "Overdue Tasks" displays all tasks which have not been assigned a completion status and the deadline of which has already passed.

Sublog "Pending Tasks" displays all tasks that currently have no completion status.

Sublog "For Requests" displays all tasks that have been set for requests and paid requests.

Sublog "For Documents" displays all tasks that have been set for incoming and internal documents.

The procedure for displaying the task list and navigating through each of the sublogs is identical. The following actions are available: Create task; filter by different parameters (user can set an unlimited number of parameters for filtering); save filter; filter by saved filter.

The main body of task logs (sublogs) displays tasks sorted chronologically by time of creation from the most recent to the oldest. A user can perform the following actions with each task: Open a page with detailed information about the task; open a form for editing the task; open a pop-up window with more detailed information about the task.

A pagination line is displayed below the task list (and above the task list when displaying 50 or more items on the page).

The information on the task view page is presented by sections: Action buttons ( e.g., edit, delete, create subtask, template, change status); basic information about the task; history of status change; task checklist; related documents; files attached to the task; write-offs of materials; history of status change; SMS; comments; history of events.

If the status is changed using the mobile application of an employee who authorized access to geodata on such employee's telephone, the system will save the geotags. Clicking the geotag opens a pop-up window displaying a map with the employee's location at the time of the status change.

Usually, the tasks in HUS ACS are created on the basis of some document, which prompts to perform some actions described in such task. This can be a request from a resident, an incoming document from a counterparty, a plan of works in the building, etc. In addition, the task itself can generate documents (e.g., subtask, write-off of materials). All documents in ACS store links to other documents. A document can be parent or child in relation to the current document.

The section "Files" displays all files that were attached to or generated for the task. This may include, for example, photos from the site of works; audio comments left via the employee's mobile application; work orders generated for the task.

The section "Write-Offs for the Task" is displayed only if a write-off of materials was recorded for the task earlier.

The section "SMS" displays a list of SMS messages sent in connection with the current task. In HUS ACS SMS messages can be sent both to the performer of the task and to the individual on whose request the works is being performed. Each SMS message is described by the date and time it was sent; delivery status; telephone number to which it was sent; content of the message; error message during delivery; and the internal number of the SMS message in the ACS.

The section "History of Events" displays information about all events that occurred in ACS with a given task. A user can control the display of the event types. By default, all events of such types as Creation, Change, and Deletion are displayed. The events of the "View" type are hidden. All events are logged automatically and cannot be deleted.

The "Comments" section displays all comments that are relevant to a given task. This may include comments left directly for a given task, as well as comments with the status "Important" left for objects (premises, individual) associated with that task. Also, in this section, the user can leave a comment on the task. A comment may include text, a note about the importance of the comment (an important comment will be displayed on the pages of all linked objects), and it can also contain an attached file.

For any task, the user can generate a template work order for performing the task. The template work order can be edited only by the employees of HUS ACS technical support. A template contains a number of references to variables, the values of which are inserted from the current task. The number of work order templates used in HUS ACS is unlimited. Two templates are set by default: Work Order and Work Order for Paid Works.

Task statuses. A task has its own life cycle, which in general includes the following sequence of stages: New - Accepted - In Progress - Resolved - Closed. Each stage has a corresponding status of the same name. In addition, there are other statuses, such as Rejected; Third Party; Subtask Assigned; Subtask in Progress; In-Progress Again; Subtask Closed.

Let's examine the significance of all statuses:
"New" means that the task was just created in HUS ACS, and no actions was performed on it.

"Accepted" means that the performer has reviewed the content of the task and accepted it in the employee's mobile application.

"In Progress" means that the performer has assigned the task the "In Progress" status through mobile application or via the web interface. According to the logic of HUS ACS, this means that the performer carries out this action immediately before the start of works specified in the task.

"Resolved" means that the performer has assigned the task the "Resolved" status via the web-interface. According to the logic of HUS ACS, this means that the performer has completed the works specified in the task but does not have the right to close the task, and waits for this step (task closure) to be completed by a higher-level employee.

"Closed" means that the performer or the task setter has set assigned the "Closed" status to the task, which means that the works have been completed and do not require additional control.

"Rejected" means that the task was not completed and, for some reason, its completion is no longer needed.

"Third Party" means that the performance of works on the task is outsourced to a third party, and the task performer is only required to monitor the scope and quality of the performed works.

"Subtask Assigned" means that part of the task is delegated to another employee, for which a subtask is created in HUS ACS. The performer of the subtask has not yet began to perform it.

"Subtask in Progress" means that part of the task is delegated to another employee, for which a subtask is created in HUS ACS. The performer of the subtask has began to perform it.

"In-Progress Again" means that the task was previously assigned the status "Closed" but, in the process of quality control, it was found that the works had been performed poorly and the task was returned for works.

"Subtask Closed" means that part of the task is delegated to another employee, for which a subtask is created in HUS ACS. The performer has already completed the subtask and assigned it the status "Resolved (Closed)". The performer of the task should go back to performing his/her part of the works.

"Removed" means that, for some reason, the task record has been removed from HUS ACS.

The status change can be either automatic or forced. For example, all statuses associated with subtasks are assigned automatically - when a user assigns the status "Closed" to a subtask, the status of the task automatically changes from "Subtask in Progress" to "Subtask Closed".

The option of forced status change is available to the user through the function of status change. For example, a user can assign the following statuses to a task: In Progress; Third Party; Reject Task; or report the fact that the task was completed by completing the task, or by assigning the status "Resolved" to it so that the higher-level employee can control its completion.

HUS ACS implements the concept of status interdependence (transitivity). This means that the status of the documents linked in a chain depends on the status of the child/parent document. If a user assigns the status "Closed" to a subtask, the status of the task automatically changes from "Subtask in Progress" to "Subtask Closed". This is an example of status interdependence. Similarly, when a task is assigned the status "Closed", the parent document (request or incoming document) changes its status. If a task is set for request with the "New" status, such request will be assigned the status "In Progress". If two or more tasks are set for the request or incoming document, the request (document) will not be assigned a completion status until all child documents are assigned a completion status.

A task checklist is a tool for fragmenting a task into its components. If the task involves several actions, the user can describe these actions, as well as assign each action. In this case, the individual items of the checklist can be delegated to the colleagues. Moreover, each checklist item can have a scheduled and actual amount of time spent and a deadline. Checklist items can be used to a prepare a calendar with the workload of employees can be formed and modify the algorithm for assigning tasks to employees and scheduling / predicting the time to complete the task based on the workload of employees. The checklists are also an alternative for using the bundles of task-subtask documents. It is more appropriate to delegate part of the scope of works by adding a checklist item and assigning it to a colleague. A task can automatically receive its checklist if the task is set according to the parent document. To do this, it is necessary to set a checklist template for the desired type and category of the document.

As an example, let' us consider the process of setting up a checklist template for the tasks created on the document "Statement of Claim". As part of this task, it is necessary to prepare a package of claim documents, submit them to the court, get a court decision and submit the case file to the bailiffs. This is the most common scenario elaborated by an experienced lawyer. Since the lawyer is experienced in performing these actions, each action is estimated in the hours and minutes it takes to complete. As most actions do not require the qualifications of a lawyer, they will be assigned to a legal assistant, and only the most responsible stages of work will be left to a lawyer (attending a court session and submitting the case file to bailiffs). When a task is created for the document "Statement of Claim", a checklist made of template items will be automatically added to such document, and these items will be assigned to relevant employees. However, regardless of whether the checklist was added automatically, manually, or not added at all, a user can always edit a checklist for a specific task by adding or removing the items.

The "Tasks" section has a separate sublog "My Activities", which contains the checklist items where the current user is the performer.

In HUS ACS, one way to delegate some of the works required by a task is to set a subtask. A subtask can be set both through the web interface and through the employee's mobile application. Let's consider the procedure for creating subtasks through the web interface. A task is created on the basis of a parent task. The following fields are automatically populated in the form for creating a subtask: Content (with the option to change the text of the content); address; requestor (if the parent task had any); requestor's telephone number (if the parent task had any); visit time convenient for the customer; performance deadline. In essence, when setting a subtask, a user needs only to complete the performer field and, if necessary, edit the content and deadlines of the task. The created subtask is displayed in the document chain on the page of all documents related to it. Setting a subtask will automatically change the status of the parent task to "Subtask Assigned".

If the use of warehouse and materials module is activated in HUS ACS, then the users can record the amount of materials and mechanisms spent during the performance of the task. This action has two purposes: Accounting of materials entering the warehouse; accounting of costs by specific buildings. ACS restricts the number of write-offs per task to one. The write-offs can include an unlimited number of materials and machinery. A user can edit a previously created write-off.

The form for creating the write-offs includes three sections that allow to record spent materials depending on the method of their acquisition. HUS ACS assumes that materials can be: a) purchased by the performer in the process of performing the task using accountable or own funds; b) previously issued to the performer from a warehouse to use them in production needs; c) the performer may have direct access to the warehouse and materials can be taken from the warehouse without documenting the procedure for issuing materials; e) section for recording the lease of machinery needed to perform the task.

Since, in the process of performing the works, the employee could buy materials from an unlimited range of items, the form for creating a record in this section allows to both search for material previously added to the range of items in HUS ACS and add a new item to the range. If the search across the range of items fails, the user can create an record of a new item. In this form, only the "Name" field is required. Next, it is necessary to specify the vendor (the place where the item was purchased), as well as to specify the quantity and cost of the item.

The form "Releases" checks the number of released items and prevents "writing off" more materials than were released to the employee. In the form, the user enters the amount of materials spent to complete the task.

The form for recording the write-offs directly from the warehouse has a similar format. HUS ACS suggests the amount of materials available in the warehouse and will not allow to write off more than this amount.

The format of the field for recording the lease of machinery has a slightly different appearance.

"Machinery Name" is the field where the user can find a machinery previously added to the ACS, or add a record of machinery not previously used.

"Duration, hrs." is the field for entering the duration of the lease of machinery. This field indicates the duration only in hours without specifying the minutes. If the machinery was leased for 90 minutes, the value to enter is 1.5, not 1.30.

"Cost, RUB, total" is the field for entering the amount that was paid for the entire period of the lease of machinery.

"Cash" is the field activated if the lease of machinery was paid in cash and must be reimbursed to the performer.

The completed write off form is saved if all fields are completed correctly. If any of the fields was not completed correctly, HUS ACS will display a warning and return the form for correct completion by highlighting the incorrectly completed records.

The saved write-off will be assigned the status "New" and will not be taken into account in warehouse and building records until the higher-level employee approves the write-off and assigns the status "Approved" to it.

HUS ACS allows to configure the reminders to MC employees about the approaching deadline for the task by SMS message, email or in the employee's mobile application. In order to receive the notifications by SMS message or email, it is necessary to enter information about the telephone number and email address of the employee in the employee card. After that, it is necessary to specify the email address and telephone number of the employee in the appropriate fields. The entered data can be edited as needed. To receive reminders in the employee's mobile application, it is sufficient to simply log into the application.

In the tasks, that are child tasks in relation to other documents (tasks set for requests, correspondence, etc.), the time of reminders depends on the deadline for the task. The option to send reminders and set the time for reminders should be set individually for each type of document. A user should select the preferred methods for sending reminders about the task (remind by SMS message, remind by email, remind by notification in the application), as well as set the time for reminders about the task in the appropriate field. This field sets the number of days, hours, and minutes before the task deadline for sending the reminders. The system allows to set the time for sending reminders only during the working hours. The time for task reminder is based on the task performance deadline rather than on the task creation time. When creating a task based on another document (request, incoming message, etc.), the time of the reminder will be calculated automatically based on the type of the primary document.

If the user creates an independent task, the user can set any time for the reminder. In this case, the user can select the method and time for the task reminder directly when creating the task. The card of created task will display information about the time and methods of reminders that are inherent for this type of task.

### Emergency shutdown module

The emergency shutdown module is used to keep the log of emergency shutdown module in order to record in HUS ACS the emergency and scheduled shutdowns of utilities that occur in the serviced residential stock, review the list of emergency shutdowns previously reported in HUS ACS, and create new records of emergency shutdowns.

When creating a new record of emergency shutdown, the following fields are required: Shutdown Resource, Building, and the Resource Shutdown Time. Other fields are optional. Once all fields are completed, the record is saved. If all information was entered correctly, the user will see an open page to view the emergency shutdown record.

In HUS ACS, the users can create an emergency shutdown not only based on the log of the emergency shutdowns, but also based on the request and task view card by using the card for creating the emergency shutdown with pre-populated field "Building" (its information will be retrieved from the address specified in the request or task), and with pre-populated field "Person Reporting the Emergency Shutdown" (this will be pre-populated with the telephone number of the requesting resident).

Viewing the emergency shutdown card. On the page for viewing the information on emergency shutdown, the user has access to the actions that can be taken on the current emergency shutdown, as well as the information on the emergency shutdown. A user can edit the information on the emergency shutdown, and print a template notice of the emergency shutdown. The user can use the notice template, when it is necessary to print a notice of the emergency shutdown in order to post it on the notice boards in buildings. After that, a file generated from the notice template posted in HUS ACS and the data specified in the emergency shutdown card will be downloaded to the user's device. The number of single-type notices that will be generated to the file will be equal to the number of sections in the building affected by the current shutdown.

Once the utility resource becomes available again after its shutdown, it is necessary to record this in HUS ACS by indicating the time when the utility resource has become available again. The form must indicate the time when the resource has become available in each building affected by the shutdown. If, in each building, the resource has become available at the same time, a user can complete the field "Actual Availability Time" and then click "Populate for All Buildings" button. The value entered in the field will be copied to the field of each building. If the resource has not become available again in all buildings affected by the shutdown, it is necessary to indicate the time when the resource has become available in specific buildings by using the form for editing the emergency shutdowns.

In HUS ACS, the users can close an emergency shutdown from the log of emergency shutdowns. In the box for closing the emergency shutdown, it is necessary to indicate the time when the resource becomes available after its shutdown and indicate the person who reported the availability of the resource after its shutdown.

The information entered in the log of emergency shutdowns in HUS ACS may be displayed on the MC website (subject to the use of a standard HUS ACS website). The output of information on emergency shutdowns can be activated on the standard website of MC but, before that, the address of the standard website must be specified in the website settings section of HUS ACS.

When it is necessary to import the data on the emergency shutdown, the user must click "Send to HUS SIS" button on the page for viewing the information on the emergency shutdown. Once this button is clicked, HUS ACS generates a message which is queued up for sending to HUS SIS. If the record on the emergency shutdown contains all required information specified in the requirements of HUS SIS then, following the delivery, the message will be assigned the status "Delivered". If the record on the emergency shutdown does not contain any information or contains erroneous information, the page of the generated message will indicate the substance of the error. The information on the results of sending the message can be viewed in multiple ways: Find the report on sending in the list of notifications and follow the link; Go to the section "HUS SIS - Integrative Communication" and find the desired message in the list of messages; View a pop-up notification on the screen displayed at the time of the message delivery.

For an emergency shutdown with the status "Eliminated", it is possible to generate an underdelivery. This can be applied to all buildings affected by the shutdown, or to each building separately. In the displayed form for creating an underdelivery, it is necessary to select a period, for which is created such underdelivery, building, for which will be generated the underdelivery, and complete other parameters. If the entered information is correct, the system will open the page for viewing the created record of underdelivery. If any data is entered incorrectly, the system will display a warning and reopen the form for creating an underdelivery by highlighting the incorrect field. The records of underdelivery can be created in bulk. In the displayed field, the user must select the period, for which will be created bulk underdeliveries. The selection of the period is determined by the time intervals, which will be recorded in the emergency shutdown module. Next, it is necessary to check all desired shutdowns and create records. After this, the user will see an open page of the underdelivery log with the notification on the number of created messages.

### Module of internal documents

The module of internal documents of HUS ACS customer is used to generate the internal documents of HUS ACS customers on the requests in progress, e.g., internal documents of the MC or a group of management companies (e.g., explanatory reports, orders, official reports, documents of the group of companies, etc.), by using the data entered in HUS ACS. The system users also have access to the configuration of the internal document typology.

### Document management module

The document management module of HUS ACS customer is used for document management. The document management module is used to create outgoing documents based on the data entered in HUS ACS. This module allows to use HUS ACS for storing and processing incoming and outgoing correspondence (incoming and outgoing documents) handled by HUS ACS customers, such as a management company. The module also allows to control the procedure of number generation for incoming and outgoing documents registered in the system. The incoming documents may include, for example, documents coming from counterparties, requests from supervisory authorities, requests from individuals, etc. The outgoing documents may include, for example, outgoing correspondence in response to previously received correspondence, etc.

By default, the documents in HUS ACS are automatically numbered with "ordinal numbers". The numbers to documents may also be assigned by users who create documents in HUS ACS. If it is necessary to set the number generation rules, this can be done by using the form for creating number generation rules. As ACS may be used by multiple companies, that could have different number generation rules, it is first necessary to select, in the form for creating the rules, a company or group of companies for the documents of which such number generation rules are created, and then create a number generation rule. Any previously created rules can be modified or deleted. The documents numbered in accordance with these rules will not be changed in case of change in the numbering rules.

The incoming and outgoing correspondence is handled by using the logs of incoming and outgoing correspondence. The logs can include sublogs for different categories (Counterparties, Individuals, Supervisory Authorities, Commercial Offers, etc.). The logs ("sublogs") are handled by sorting, filtering, viewing the correspondence card, etc.

HUS ACS allows you to create outgoing correspondence based on a predefined template. The system users also have access to the configuration of the outgoing document typology. The outgoing message can be created on the page of the log (sublog) of outgoing messages, and the outgoing message can be also created on the page of the log (sublog) of incoming messages in response to the incoming message. In the form that opens when creating a message, some fields can be populated automatically with the option of subsequent editing (for example, the number and date field of the outgoing message, if the ACS is configured and uses the rules of number generation, time of message creation), the values of some fields can be selected from drop-down lists (for example, building (address), recipient of the message, sender of the message), some fields are completed manually (such as the message text, assigned track number).The files can be attached to the created outgoing message.

### Module of work certificates

The module of work certificates is used to generate work certificates in accordance with the established form by using the data entered in HUS ACS.

Example of work certificate creation:
1. Selecting MDUs, for which it is necessary to generate a work certificate.
2. Configuring the list of services for the maintenance of MDU.
3. Creating the list of works on current repairs of MDU.
4. Generating the work certificate.

At each step, the user can see a corresponding box to enter the required information.

### Seasonal inspections module

In HUS ACS, the users can use the seasonal inspection module to create schedules seasonal inspection schedules for MDUs and prepared spring and fall inspection certificates on their basis with the form for creating the seasonal inspection schedule and the form for creating the spring and fall inspection certificate.

The log for viewing the seasonal inspection schedules displays all buildings recorded in HUS ACS. When necessary, a user can filter the content of the log by selecting the desired address. The log contains information on the periods of seasonal inspection, such as year and season (spring, fall). Completed seasonal inspections with adopted decision of the supervisor and prepared certificate have the status "Completed". Seasonal inspections that are in progress have the status "In Progress".

All created fall and spring inspection certificates are stored in the log "Seasonal Inspections - Inspection Certificates". A created certificate has the status "Draft". Once all data is checked, the certificate can be submitted for processing and its status can be changed to "Prepared". The entire status change history is saved. The certificate can be re-assigned the status "Draft" so that the user can save it. When all data is reconciled and the management company is ready for the seasonal inspection, the status should be changed from "Prepared" to "In Progress". HUS ACS will automatically create a task, the performer of which will be the person in charge of the seasonal inspection.

All information about the performer and participants can be viewed in the card of the seasonal inspection certificate. The performance deadline of the task depends on the season, for example, the deadline for the spring inspection is May 31, and the deadline for the fall inspection is November 30. The content of the task includes the address of the building where the inspection should be conducted.

In addition to the active action buttons that are standard for the task, a user has a checklist where such user can check the works done on the task. This checklist is standard, and the user can edit it as needed.

Once all works on the task are completed, the performer can close the task, and the status will change to "Completed".

After the MDU inspection, the performer enters the results of the inspection into the HUS ACS. The examples of information to be entered by the user include general information on the building, content of the inspection and of the inspection process, results of the inspection in the parts of buildings and structures, and the engineering equipment. A user can also specify the actual dates of the inspection and edit the members of the commission. Once the data is completed, it is necessary to save the entered information. Now the user can generate an inspection certificate template based on the previously submitted data. The document status will change to "In Progress". After all data was entered and the certificate was generated, the user can finish the inspection, and the document status will change from "In Progress" to "Inspection Completed". If it is necessary to edit the information, the user can return the certificate for revision. The final stage in the processing of the seasonal inspection certificate is its approval. After its approval, the status of the certificate will change to "Approved". If necessary, the certificate can be returned for revision.

### Warehouse module

The warehouse and materials module is used to keep records of materials coming into the warehouse and track the costs building by building. Also, the use of this module enables users to record the amount of materials and machinery spent while performing the task.

### Cost estimate module

Cost estimate and job catalog module includes the job catalog (list of services) and is used when completing the forms that contain information about works (services). For example, when completing the work certificate form at the stage of creating a list of works for the current repairs of MDU, the services can be selected from the list of services, which is pulled from the cost estimate module.

### Resident registration module

In HUS ACS, the resident registration module is used to create records of registration actions (e.g. records of registration at the place of residence, records of registration at the place of stay, records of deregistration at the place of residence/stay, preparation of the temporary departure certificate), issue certificates, generate registers, issue copies of personal accounts, issue copies of apartment cards, perform data entry in the apartment cards, keep various logs (e.g., a registration actions log containing information on all registration actions recorded in the HUS ACS; log of issued certificates). Each record in the log is identified by the type of registration action, as well as by the status assigned to that action. To go to the details of the registration action, it is necessary to click the number of the desired action, which will open a page to view information about such action. The page for viewing the information about the registration action, displays the properties of such action, buttons to control the action, as well as all the files that were generated while processing such document. The document can be edited, assigned another status of the registration action, deleted (when deleting it is necessary to add a comment on the reasons for deleting the document), used to generate template documents that can be prepared for such type of registration action. The generated documents are stored in the HUS ACS database and can also be downloaded to users' devices.

In HUS ACS, a record of registration at the place of residence can be created by completing the form for registration at the place of residence, which contains many interrelated fields which must be completed one by one in the order of their placement. For example, it is necessary to specify the address for the registration, personal account to which the resident will be assigned for the purposes of charges, and select a previously created record of the individual in the "Applicant" field, or create a new record. If a previously created record is selected in HUS ACS, all fields, for which the information is already stored in HUS ACS, will be populated automatically. Next, the remaining fields are completed depending on whether the registration is performed for a person of legal age and whether the individual is subject to military service registration, and the information is saved. All data entered in the form for creating a record of registration action are stored in the ACS and are used later to generate template documents for such registration action. A record of registration at the place of stay is created in accordance with the same procedure.

A record of deregistration at the place of residence/stay and preparation of the temporary departure certificate are made by completing the forms for creating the appropriate registration actions, each of these forms contains many interrelated fields which must be completed one by one in the order of their placement. In HUS ACS, the temporary absence of a resident is documented by a corresponding registration record created and considered in the charges in accordance with the formulas based on the number of residents registered in the premises.

The residence registration module also allows to issue various certificates (e.g., certificate of registration at the place of residence, certificate of passport loss; certificate of deregistration; certificate of residence registration of the deceased at the time of death; certificate of absence of data at the place of residence). Each type of certificate is created by completing the fields of the corresponding form for creating such type of certificate. All certificates previously generated in HUS ACS are available in a separate log of issued certificates.

Also, the resident registration module allows to generate the registers that can be requested by external parties or organizations (for example, the register of citizens registered for military service; the register of owners of premises in MDU). Each type of register is created by completing the fields of the corresponding form for creating such type of register. For example, to create the register of owners of premises, a user must select the building for which the register will be generated, indicate the initiator to whom the generated register will be sent, specify the area of residential/nonresidential premises, etc., and save the entered data; to create a register of citizens registered for military service, a user must specify the period for generating the data, select the MC from the residential stock of which will be collected the data, and indicate the military commissariat where the information will be submitted. For example, the registers can be generated in such format as *.docx

In addition, the resident registration module allows to export the generated registers (log of registrations at the place of residence, log of registrations at the place of stay) from HUS ACS in such file format as *.xlsx.

All documents on registration actions contained in HUS ACS and assigned other than a completion status (for the documents on registration actions, a completion status is "Accepted" or "Rejected") are available to users in a special log of documents for approval.

### Telephony module

In HUS ACS, the telephony module allows to view the log of all calls made with the ATE of HUS. The log has an appearance that is standard for HUS ACS, with slight changes in the interface which allow to listen to any call recording from the log page. The log has the following fields: Time of the call (time when the call was made is recorded in accordance with the time zone specified in the settings of HUS ACS), origin of the call (telephone number used to make the call. If the call was made by MC employees, it is possible to indicate the internal telephone number of the employee), call destination (telephone number used to receive the call), start of the call (time when the ATE received the incoming call signal (initiated the outgoing call)), end of the call (time when the communication between the callers stopped), duration of the call (difference between the time indicated in the start and end time of the call), objects (documents created in HUS ACS as a result of such call), call recording, operator (MC employee who participated in the call), dispatcher waiting time (time interval between the point when the call was redirected to alternative option of "connecting to the dispatcher" and the point when the dispatcher picked up the telephone). Digital ATE of HUS can additionally be connected to the call center of HUS ACS customer, and such call center can be used, for example, to receive calls, make calls to various organizations, or call the residents by MC dispatchers.

The functionality of receiving calls via the operational log is available to users that are registered on ATE of HUS and use the telephony module of HUS ACS. The operational log is a set of events stored in HUS ACS and relevant for the current call. At the time of receiving a call, a notification will be displayed to the employee who receives such incoming call on his/her internal telephone number. Such notification contains information about the telephone number, from which the call is received, and if that number was previously stored in HUS ACS, the address and full name of the caller. In HUS ACS, clicking on the "Operational Log" link displayed in the notification will open the "Operational Log" page, which contains all action buttons that may be useful in processing the call and information about significant events related to the caller. The header of the page displays information about the telephone number from which the call is received. Then there are two buttons: Green (Register Request) and red (Register Emergency Shutdown). When a user clicks the green button "Register Request", ACS will open the request form where only the "Telephone" field is pre-populated. When a user clicks the red button "Register Emergency Shutdown", this will open the form for creating an emergency shutdown record. In addition, the section of emergency shutdowns displays all records of emergency shutdowns that are contained in HUS ACS and meet the following criteria: Status "Active" or status "Liquidated" assigned in the last 10 days; caller is assumed to reside in the affected building. The details of any emergency shutdown can be accessed by clicking the task number. The section "Tasks" displays all records of tasks that are related to the caller and are incomplete or have been closed in the last 10 days. The details of any task can be accessed by clicking the task number. The section "Metering Devices" displays information on all metering devices installed at the assumed residence address of the caller. At the end of each line with the metering device, there is a button to enter the readings for such metering device. Once all readings have been entered and saved, the entered data will be stored in HUS ACS.

Opening the forms for creating a new request or new emergency shutdown from the Operational Log page ensures the establishment of a link between the call record and the child document record.

HUS ACS has the functionality to automatically notify individuals calling the dispatch service about the status of events relevant to the callers. For example, this may be the information on the progress of works on their request or on the emergency shutdown that occurred in the building where they reside. All automatic alerts are recorded and displayed in the log of automatic alerts in the telephony module. The log has an appearance that is standard for HUS ACS. The log displays the following information: "Time of the Call" (the point in time when the call was connected to the ATE), telephone (caller's telephone number), "Alert Type" (type of information that was communicated to the caller), "Caller's Action" (information about the action made by the caller after listening to the alert), "Call" (link to view detailed information about the call during which the current alert was made). If the caller listened to two or more types of alerts during the call, the log of automatic alerts will separately display information about each of the listened alerts.

The types of automatic alerts can be managed in the telephony module settings. The settings allow to activate/deactivate caller notifications about active emergency shutdowns, activate/deactivate notifications about the status of requests submitted by the caller in the last 3 days. In HUS ACS, the notifications of emergency shutdowns are played back "without the authorization of the caller" and "played back only once". Notifications about the status of received requests can be played back only on demand of the caller, and such demand can be made using the tone mode during the call.

In the settings, HUS ACS allows to enter the telephone numbers for which the automatic notification of emergency shutdowns should be disabled.

The telephony module has a log of automatic calls and contains all information about all automatic calls made using the ATE of HUS. The log has an appearance that is standard for ACS. Each line of the log contains one job for automatic outgoing call. In the log, each record of automatic call contains the following information: "Creation Time" (the point in time when HUS ACS initiated the automatic call procedure, the time is recorded in the time zone specified in the ACS settings), "To" (telephone number to which the call is made), "Automatic Call Type" (the type of event for which the automatic call is made), "Parent Document" (HUS ACS document which initiated the current automatic call), "Call" (number of attempts made during the current automatic call), "Call Log" (this displays no more than five recent attempts to reach the call recipient during the current automatic call). The color marker of the attempt describes the status of the attempt, where the successful automatic calls are highlighted in green; attempts, in which the call recipient was reached but the automatic call script was not completed successfully are highlighted in yellow; and attempts, which ended without reaching the call recipient, are highlighted in orange. "Status" displays the status of the current automatic call. If the number of specified attempts is not reached but the success is not achieved, the system will display the status "In Progress"; if the automatic call reached the defined result, the system will display the status "Success"; if the automatic call did not reach the defined result, and the specified deadline or the number of attempts is reached, the system will display the status "Missed Call".

In addition to the information that was available in the automatic call log, the record of the automatic call contains information about the user who initiated the automatic call (author) and document links, including links to all dialing attempts made during the current automatic call.

In HUS ACS, the telephony module allows to manage the blacklist of callers. The blacklist is designed to block incoming calls from unwanted callers. To add a record of new telephone number to the blacklist, the incoming calls from which will be blocked by ATE of HUS, a user completes a form where such user enters the telephone number to be blocked and selects a time interval ( e.g. 1 hour, 3 hours, 6 hours, 12 hours, day, week, indefinitely), during which incoming calls from this caller will be blocked. If necessary, a record for adding a caller to the blacklist can be removed in order to stop blocking incoming calls from such caller.

HUS ACS allows direct integration with external telephony services, such as third-party virtual ATEs, through an integration API, e.g., when MC is served by a third-party virtual ATE.

The telephony module allows to handle the bulk notifications of residents to send any notifications to the owners of premises.

The notification log of telephony module has the following fields: Creation time of bulk notification, notification time, message (this displays the text of the message), building (buildings where the notifications are sent), residents (number of residents to whom the notifications were sent), status. The notification log also allows to export the generated list of bulk notifications in a selected format, such as PDF or Excel, to view information about bulk notifications, view document links, and view information on each item.

The bulk notification of residents is created by completing a form for creating a notification. "Message" is a required field. The users can enter any text that needs to be communicated to the residents. The field "Notification Method" allows to choose how the message will be delivered to the residents: By distribution of SMS messages, through push notification in the application, or by automatic call. This field is required. A user can set any time for bulk notification of residents. This field is required. "Organizations" is the field for selecting legal entities, which will receive the bulk notification. "Buildings" is the field where the users can select a building, the residents of which must be notified about the event. It is also possible to select specific premises (e.g., apartments) for sending bulk notifications. If the notification must be delivered to specific residents rather than across the entire building, users can select recipients in the "Residents" field. There is also an option to upload any list of telephone numbers for bulk notifications as a file (such as a .xlsx file), which contains only a list of numbers. The user will be shown information about the uploaded numbers. If the telephone number matches a resident, HUS ACS will display the resident's full name next to the telephone number. "Resident not found" message will be displayed next to the telephone numbers that are not stored in the system. A user can double-check the list and select the numbers that such user wants to use for sending notifications (activate/deactivate checkbox). Next, once the entered information is saved, the user will see the created bulk notification card. A user can edit or delete a created notification. It is possible to schedule the distribution of notifications at a specific time. In the notification settings, a user can select the recipients of notifications within specific premises. When sending the notifications by premises, a user can select either of two options: sending the notifications only to the owners of personal accounts of the selected premises, or sending them to PA owners, owners of premises and all residents within such premises.

### Email module

The email module allows to connect an unlimited number of email addresses to HUS ACS and use the full functionality provided by email. In the HUS ACS email module, the users can configure the document typology.

The initial configuration of the email is performed as follows. In order to use email through HUS ACS, it is necessary to connect an email address to HUS ACS using the form for adding an email account. In the "Address" field, it is necessary to enter the name of the mailbox that the user wants to add. The name should be entered along with the domain zone. In the "Password" field, it is necessary to enter the password to be used for authorization in the mailbox. In the "Mailbox Type" field, it is necessary to select a third-party mail service, where the mailbox to be added was opened. "Sender Name" field is used to specify the sender's name that will be inserted in emails from HUS ACS sent using this mailbox. "Signature" field allows to add an auto signature that will be added to the sent emails. "Import Mail" field activates the option to receive emails from a specified address in HUS ACS. "Import Interval, min" field is used to specify the time interval for importing emails into HUS ACS. The minimum interval is 5 minutes. After saving, the user will see the page of the created mailbox. The user can perform actions that allow to edit a mailbox, delete a mailbox record from HUS ACS, or write a new email. The form for viewing the mailbox information contains general information about the mailbox, a log of messages received using the mailbox, and a log of events that occurred in ACS with the mailbox.

Immediately after adding a mailbox, the system starts the procedure of importing incoming mail from the mailbox. It completes correctly if the user entered the valid login and password for the mailbox. The initial import includes all incoming correspondence received during the last 7 days.

Incoming mail received across all mailboxes added to HUS ACS is stored in the incoming mail log. These messages can be viewed by using the incoming mail log. Each email is described by its ordinal number, the time when the email was received by the mail server (this time is not equal to the time when the email was uploaded to HUS ACS); subject of the email; sender of the email; status of the email; mailbox, to which it was sent.

The incoming mail log is handled the same way as any other document log in ACS - there is an option to filter documents; manage the output parameters; and control the number of items per page.

The user can create a response to an incoming email, create a task for an incoming email, change the status of an email, for example, by assigning it a relevant status.

Let's consider the process of creating a task for an incoming document by using the task definition box. If the details of email sender are stored in HUS ACS (the sender's email is identical to the email address property of any individual in HUS ACS), then the opened task form will be pre-populated. For example, this means that the task fields "Address" and "Requestor" will be populated automatically. In other respects, the form for creating a task for an incoming message is identical to the general form for creating a task. The page of created task in the section of document links will display the link of the task with the incoming email. Similarly, the link will be displayed on the incoming document page.

In accordance with the principle of interdependence of statuses in the HUS ACS, the task definition will change the status of incoming email to "In Progress".

With the card of the task defined for the incoming document, a user can create an outgoing document.

A user can also send an outgoing email in response to a previously received incoming email. The form for outgoing email may contain such fields as "To" (the email address(es) to which the email will be sent), "Subject" (the subject of the email), "Text" (the body of the email which can contain text, images, hyperlinks). "Signature" specified in the mailbox settings will be automatically inserted into the "Body" of the message. In addition, the "File" field can be used to attach an unlimited number of files to an email. It is important to remember that the email services impose a restriction on emailing large files , and there is a possibility that an email may not be sent for that reason. It is recommended to host large files on file-sharing sites in advance, and use the email to send a link to download such files. The graphics editor allows to design the text of an outgoing email and has all the basic features that a user may need.

HUS ACS has an option to add a recipient to the blacklist. To do this, it is necessary to enter unwanted addresses in the blacklist of addresses in the settings and save. If a recipient ceased to be unwanted, such recipient should simply be removed from the list.

HUS ACS has a spam log. It includes all emails that have been identified as spam by an external mail server, as well as all emails from addressees added to the blacklist. Any email included in the spam log is available for viewing by users. If an email was included in spam by error, the user can move such email to the inbox.

### Charging and payment module

The charging and payment module is used to analyze and compare tariff schedules by various parameters (e.g., it is possible to set such parameters as building, service, premises, PA assignment, PA status, etc.), and it is also possible to select groups of parameters for comparing tariff schedules. In addition, the charging and payment module allows users to create and configure their own plans to distribute the funds received from payments for housing and utility services. When creating a payment in HUS ACS, the appropriate payment distribution plan is selected automatically in accordance with the personal account parameters. There is also an option to track unidentified payments when uploading the payment registers. The payment register log includes information on all payment registers uploaded to HUS ACS.

### Debtor management module

The debtor management module allows to perform bulk operations with debtors' personal accounts, e.g. by using filters, generate bulk notifications, collection requests, send out bulk SMS messages, launch automatic bulk calls on required personal accounts, and handle debtors individually for each personal account (create debt notification, collection request, PA order, installment plan agreement, send SMS messages to debtor, schedule automatic calls to debtor).The generated documents can be viewed using the corresponding logs (e.g., log of debt notifications, log of collection notifications, log of order notifications, log of SMS notifications sent to debtors, log of automatic bulk calls, log of installment plan agreements).

### Online cash register module

The online cash register module allows to send information about payments for housing and utility services to the tax authorities, as well as to the payers, through online cash registers, such as ATOL. The online cash register module has the following features: Uploading of payment registers based on templates from HUS SIS; bulk or individual tax reporting on uploaded registers (transfer of information on payments to the tax authority with the registration of online receipts); automatic tax reporting of payments coming via MA or from a personal area on MC website (if online acquiring is connected); status tracking of data exchange with online cash registers; storage of information on generated receipts in the system and viewing of receipts at the fiscal data operator's website; automatic delivery of online receipts to email addresses of residents or MC.

### Reports and analytics module

The reports and analytics module allows users to generate reports and analytics information based on any data posted in HUS ACS, create custom management reports and analyze the information posted in HUS ACS. The reports and analytics module receives data from the HUS ACS modules and generates reports and analytics based on such data.

For example, the reports and analytics module allows to generate the following reports.

The extended report on dispatch room module (report on all requests entered into the HUS ACS) includes the characteristics of these requests and is generated in accordance with the requests module. The provided characteristics allow the user to analyze the request and track how much time was spent on individual operations for the request. In addition to the extended report, the users can generate a shift report and a daily report on the operations of the dispatch service for the desired period. The daily report allows to track the total number of requests received on a specified date for each management company (in case there are several MCs using ACS), as well as the breakdown by type of requests. The shift report displays the requests with the status "Closed", i.e. only those requests that have been completed by the performer. At the same time, the report allows you to track the time when the request was received and the time when the works were performed on a given request.

The available reports also include "Requests by Organization and Status" and "Requests by Organization and Building". The report "Requests by Organization and Status" allows to track the number of requests for each management company by request status. The report "Requests by Organization and Building" allows to track the number of requests for each company by residential stock object.

The users can generate standard reports on the task module, such as "Tasks by Performer" and "Tasks by Type".

If necessary, it is possible to generate a report/list of active emergency shutdowns for emergency shutdown module. When generating a report, it is possible to select the type of desired report, such as the one for internal or external use. The report for internal use will include all active emergency shutdowns. The report for external use will include all active emergency shutdowns except for the local ones, which affect only some apartments in the building.

HUS ACS also has the option to generate an "Operational Information" report for the emergency shutdown module. This report contains information about all emergency shutdowns for the specified period in the context of services.

The users can generate reports on the amount of incoming and outgoing correspondence within the document management module, along with the indication of the document status. The report "Incoming Correspondence by Status" will display information about the number of incoming documents in the context of the type and status of incoming correspondence. The report "Outgoing Correspondence by Status" contains similar information on outgoing correspondence.

HUS ACS implements the generation of privatization report based on the resident registration module, which contains information on the number of apartments and their areas by ownership type, as well as the generation of report on the number of registered persons / residents, which contains information on the number of registered persons and residents in each of the premises of the building included in the report.

In HUS ACS, a user can also download the reports on the total service volume, or the total area of PAs for services based on the charging and payment module. The report "Total Service Volume" will display information on the consumption volume charged for each utility service at the selected address for the specified period. The report "Total Area of PAs for Services" displays both the total area and separately the total area of residential premises for all personal accounts of the selected building in the context of services.

The users can analyze the statistics of generated online receipts, such as, "Receipts" or "Return Receipts". For example, it is possible to display information on the number of generated online "Receipts" in the context of the current month.

There is also an option to generate analytics on accounts receivable in the debtor management module, such as the ruble-denominated amount of accounts receivable or accounts receivable expressed as a percentage and calculated as the ratio of unpaid bills to the total amount of issued bills.

### Module of document typology settings

The module of document typology settings (module of document typology) enables users to create and configure the document typology. As a result, this module allows a user to fully customize the structure of HUS ACS documents by changing the standard HUS ACS document typology or creating a custom typology from scratch.

The users can customize the types of such documents, such as internal documents of MC (documents of the group of companies, explanatory notes, orders, memos); documents of the dispatch room module (emergency shutdowns, warranty requests, requests, paid requests, problems); documents of the document management module (incoming correspondence from contractors, requests from supervisory authorities, applications from individuals); documents of the email module (messages); documents from the website (questions from the website). If necessary, the created typology can be displayed in the resident's MA and/or on the standard website of MC.

The settings in the module of document typology contain all information about the previously specified settings for each item of the typology. The general view of the log in this section is described by such fields as the document included in the typology, typology (selected types and subtypes for the specified document), and the parameters (user-selected characteristics for the specified typology). The setting can be edited by a user as needed. For example, for such typology as "In-House Utility Equipment and Technical Devices/Hot and Cold Water Supply System" of the "Request" document, a user can edit the access groups that can handle the specified document and its tasks, and set the deadline for the task assigned to the selected document. In addition to the task deadline, the users can also set a time limit for finalizing the completion of the task.

A user interacts with HUS ACS through a user device that contains an interface for user interaction with HUS ACS, such as mobile applications (e.g., resident's mobile application, HUS ACS employee's mobile application), web interfaces (e.g., HUS ACS customer's website).

HUS ACS customer's website allows MDU owners to receive basic information from their MC, submit requests, enter meter readings, view and pay payment documents, view information about their PA, and ask questions through the contact form. On the website, MDU owners have access to their respective personal areas, where the residents can contact their MC. When the website is visited on a mobile device, the information will adapt to the screen to ensure a user-friendly experience.

The resident's mobile application (MA) is designed to facilitate the communication of residents with the MC and is integrated with the HUS ACS. In the application, the residents can leave requests, enter meter readings, view payment documents and information about their respective personal accounts, view information about the meetings of apartment owners, view announcements and news from MC, send appeals to the state authorities, or chat with other MDU residents. The employee's mobile application is designed to facilitate communication between the staff of the management company.

With the employee's mobile application, MC employees can not only handle tasks for requests and paid requests and report their completion, but also view information on the buildings, emergency shutdowns and communal meters (CM), and enter the CM readings.

The presented embodiment of this invention should not be used to limit its other, particular embodiments of this invention that are within the scope of the claimed legal protection and are obvious to those skilled in the relevant art.

Fig. 4 shows a general diagram of the computing device (400) that provides the data processing required for implementing the claimed solution.

In general, the device (400) comprises such components as: one or more processors (401), at least one memory (402), data storage means (403), input/output interfaces (404), input/output means (405), networking means (406).

The device processor (401) executes main computing operations, required for the functioning of the device (400) or functionality of one or more of its components. The processor (401) runs the required machine-readable commands contained in the random-access memory (402).

The memory (402) is typically in the form of RAM and comprises the necessary program logic which ensures the required functionality.

The data storage means (403) can be in the form of HDD, SSD, RAID, networked storage, flash-memory, optical drives (CD, DVD, MD, Blue-Ray disks), etc. The means (403) enables the long-term storage of various types of information.

The interfaces (404) are the standard means for connection and communication with the server side, e.g. USB, RS232, RJ45, LPT, COM, HDMI, PS/2, Lightning, FireWire, etc.

Selection of interfaces (404) depends on the specific embodiment of the device (400), which could be a personal computer, mainframe, server cluster, thin client, smartphone, laptop, etc.

Any embodiment of the system must use a keyboard as its input/output means (405). The keyboard can have any known hardware design: it can be a built-in keyboard used on a laptop or netbook, or a stand-alone device connected to a desktop, server or other computer device. In this case, the connection can be wired, where the keyboard's connecting cable is connected to PS/2 or USB port located on the system unit of a desktop computer, or it can be wireless, where the keyboard exchanges data over a wireless channel, such as a radio channel, with the base station which, in turn, is directly connected to the system unit, for example, via a USB port. In addition to the keyboard, the following can also be used as the input/output means: a joystick, display (touch-screen display), projector, touch pad, mouse, trackball, light pen, loudspeakers, microphone, etc.

Networking means (406) are selected among devices that ensure receiving and transmitting data over a network, e.g. an Ethernet card, WLAN/Wi-Fi module, Bluetooth module, BLE module, NFC module, IrDa, RFID module, GSM modem, etc. The means (405) enable data exchange through wire or wireless data communication channel, e.g. WAN, PAN, LAN, Intranet, Internet, WLAN, WMAN or GSM, 3G, 4G, 5G.

The components of the device (400) are interfaced via a common data bus (407).

These application materials disclosed the preferred embodiment of the claimed technical solution, which should not be used to limit its other, particular embodiments that are within the scope of the claimed legal protection and are obvious to those skilled in the relevant art.

To those skilled in the art, it should be clear that the variations of the claimed method and system do not change the essence of this invention, but only define its specific embodiments and applications.

## Claims

1. The automated control system of the housing and utilities sector (HUS ACS) which includes at least the following:
management server of HUS ACS;
database connected to the management server of HUS ACS;
at least one user device containing at least one user interface with the HUS ACS;
At least one digital automatic telephone exchange (ATE) of HUS ACS connected to the management server of HUS ACS;
at least one automated workstation (AWS) connected to the management server of HUS ACS and digital ATE of HUS ACS;
HUS ACS modules connected to the management server of HUS ACS, and such HUS ACS modules are interconnected and include, at least, the following modules: module of organizations, buildings and premises module, emergency shutdown module, dispatch room module, document management module, seasonal inspections module, warehouse module, cost estimate module, resident registration module, telephony module, email module, module of documents, charging and payment module, debtor management module, online cash register module, module of HUS ACS user website;
moreover, the objects of the organizations module and objects of the buildings and premises module are linked to the documents of the following modules: emergency shutdown module, dispatch room module, document management module, seasonal inspections module, warehouse module, cost estimate module, resident registration module, telephony module, email module, module of documents, charging and payment module, debtor management module, online cash register module, website module; in addition, these documents are linked to each other so that each current document is linked to its parent and/or child document, and the status of the current document depends on the status of the parent and/or child document; and
user access to the said objects and documents is provided in accordance with the access rights and/or access groups.

2. System according to claim 1, *which is **characterized in that*** the dispatch room module includes, at least, a request module and a task module.

3. System according to claim 1, *which is **characterized in that*** the modules of documents include, at least, a module of internal documents and a module of work certificates.

4. System according to claim 3, *which is **characterized in that*** HUS ACS additionally includes a module of document typology settings of HUS ACS modules.

5. System according to claim 1, *which is **characterized in that*** HUS ACS additionally includes a reports and analytics module, and HUS ACS modules communicate data to such reports and analytics module.

6. System according to claim 1, *which is **characterized in that*** HUS ACS is integrated, at least, with the following external services: the information systems of housing and utilities sector, information address systems, accounting systems, tax accounting systems, acquiring systems, telemetry systems, SMS messaging services, voice services, virtual telephony, mail services, unified state register of legal entities, cloud services, including at least cloud-based online cash registers and cloud-based data storage.

7. System according to claim 1, *which is **characterized in that*** the digital ATE is additionally connected to a call center.

8. System according to claim 1, *which is **characterized in that*** the objects of the organizations module include the organizations and the objects related to the organizations; and the objects of the building and premises modules include the buildings, objects related to the buildings; premises, objects related to the premises.

9. System according to claim 1, which is ***characterized in that*** the users of HUS ACS may be the residents of buildings and organizations of at least the following types: management company, insurance company, court, bank, counterparty, supervisory authority, military commissariat, executive authority, registration authority.

10. System according to claim 1, *which is **characterized in that*** the user interfaces of HUS ACS are at least the graphical user interfaces of the resident's mobile application, HUS ACS customer's employee's mobile application, HUS ACS user's website, and web interfaces.
